# EUROPEAN PATENT APPLICATION

(11) **EP 2 043 351 A1**
(43) Date of publication of application: **01.04.2009**
(21) Application number: 07117373.6
(22) Date of filing: 27.09.2007
(51) Int. Cl.: H04N 1/40

(54) **Method, system and software for screening an image**

(71) Applicant: HEWLETT-PACKARD DEVELOPMENT COMPANY, L.P., Houston, TX 77070 (US)
(72) Inventor: Melamed, Michael, 76101, Rehovot (IL); Fischer, Mani, 32000, Haifa (IL)
(74) Representative: Durville, Guillaume

(57) **Abstract**

A method for screening an image, comprising pixels, prior to printing the image using a variable exposure level printer capable of printing at a plurality of exposure levels is provided. The method comprises providing a plurality of exposure level screening matrices for screening pixels of the image. Each matrix is associated with a different printing exposure level and includes a set of threshold values for screening a corresponding set of pixels in the image. Each pixel of the image is to be printed as a continuous tone (CT) value. The method further comprises determining the exposure level at which a pixel should be printed or whether should not be printed by comparing the CT value of each pixel with its corresponding threshold value from any one or more of the matrices.

## Description

Embodiments of the present invention will now be described, by way of example only, with reference to the accompanying drawings in which:
**Figure** 1 shows an image screening system according to a first embodiment of the invention;
**Figure 2** is a flowchart illustrating an image screening method according to the first embodiment of the invention;
**Figure 3** shows an image screening system according to another embodiment of the invention;
**Figure 4** show matrices of a system according to another embodiment of the invention;
**Figure 5** is a flowchart illustrating an image screening method according to another embodiment of the invention;
**Figure 6** is a flowchart illustrating an image screening method according to another embodiment of the invention;
**Figure 7** illustrates a printed output of the image screening method of this invention using the matrices of Figure 4; and
**Figure 8** shows a CD carrying software according to an embodiment of this invention.

Where it is desired to simulate continuous tone (CT) imagery, for example continuous tone shades of grey on a printed page, the particular shade of grey to be printed has an associated continuous tone value. For example a continuous tone range may extend from 0 to 1000, with 0 representing white and 1000 representing black. A continuous tone grey image, for example grey 300, can be achieved via a printer printing a specific arrangement of individual pixels within a block of pixels in which it is required to provide the grey 300 continuous tone image. Within the block of pixels, some will be printed (e.g. they will be black) and some will not be printed (e.g. they will be white). To make up a larger region of a continuous tone image, these blocks of pixels are generally replicated next to each other. To the human eye, when the arrangement of pixels are viewed on a page, they appear as a continuous tone image and not as individual printed pixels being dispersed with individual non-printed pixels. The tone of the final image is determined by the printed pixel density - i.e. the greater the number of printed pixels relative to non-printed pixels, then the greater the darkness of the final image.

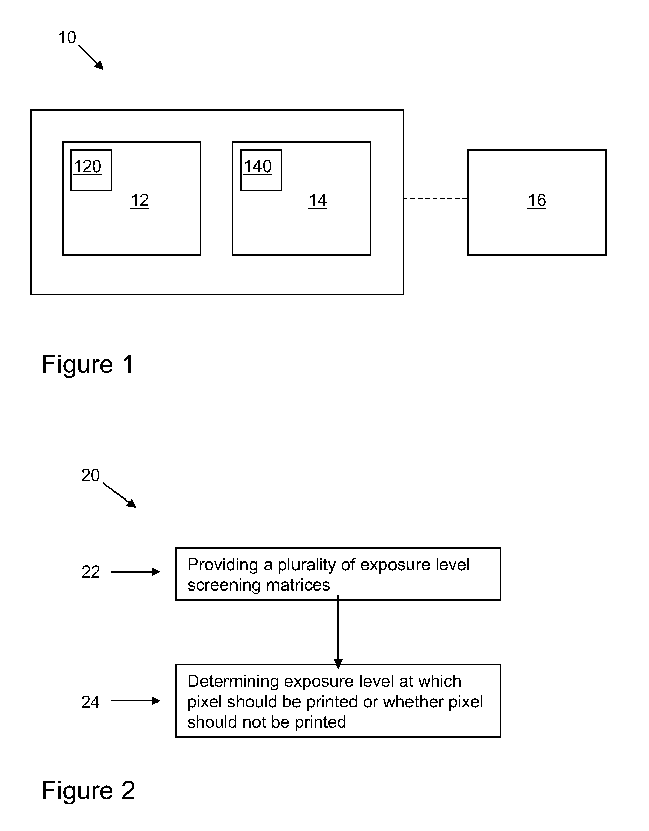

Referring to Figure 1, an image screening system 10 according to a first embodiment of this invention is able to screen an image before the image is printed using a variable exposure level printer which is capable of printing at a plurality of exposure levels. Therefore the system 10 is able to provide instructions to the variable exposure level printer in order to print the image in a desired form. In some embodiments the printer is separate to the system 10. The system 10 comprises a plurality of exposure level screening matrices 12, 14. In this embodiment there is a first exposure level screening matrix 12 and a second exposure level screening matrix 14. In other embodiments there may be three, four, five, six, seven, eight, nine, ten or any other suitable multiple number of exposure screening level matrices.

The exposure level screening matrices 12, 14 are arranged to screen pixels of the image and each matrix is associated with a different printing exposure level. Each matrix 12, 14 include a set 120, 140 of threshold values for screening corresponding set of pixels in the image. The first exposure level screening matrix 12 includes a first set 120 of threshold values and the second exposure level screening matrix 14 includes a second set 140 of threshold values.

Each pixel of the image to be printed has an associated continuous tone (CT) value as previously mentioned. If an entire image or region of an image is desired to be printed at a particular CT value then each pixel within the image or region of the image will have the same associated desired CT value. The system 10 further comprises a comparator 16 arranged to determine an exposure level at which the pixels should be printed or whether or not the pixels should be printed at all. The comparator 16 achieves this by comparing the CT value of each pixel with its corresponding threshold value from either one, 12, 14 or both 12 and 14, of the matrices.

Referring to Figure 2, an image screening method 20 for screening an image, comprising pixels, prior to printing the image using a variable exposure level printer which is capable of printing at a plurality of exposure levels comprises providing 22 the plurality of exposure level screening matrices 12, 14.

Each pixel of the image to be printed has an associated CT value.

The method 20 further comprises determining 24 the exposure level at which the pixel should be printed or determining that the pixel should not be printed at all. This determining 24 is achieved by comparing the CT value of each pixel with it corresponding threshold value from one or more of the matrices 12, 14.

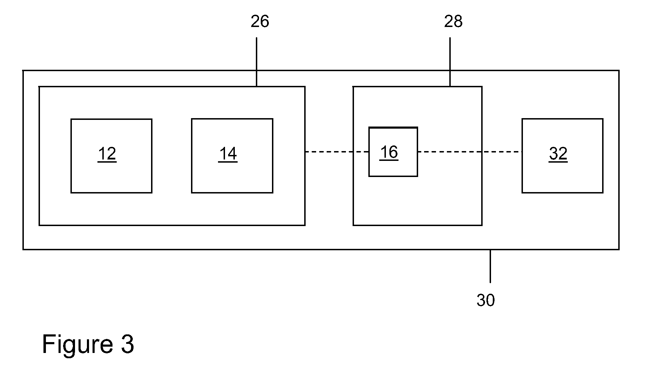

Referring to Figure 3, in a further embodiment, the matrices 12, 14 are stored on memory 26 which is in communication with a processor 28 which has the comparator 16 located thereon. The comparator 16 is able to interrogate the matrices 12, 14. The memory 26 and the processor 28 of this embodiment are provided on a single computer module which is part of the printer 30. The printer 30 is the variable exposure level printer which is capable of printing a plurality of exposure levels. The printer 30 includes a printing module 32 which takes instructions from the determinations made by the comparator 16 relating to the exposure level at which the pixel should be printed or whether the pixel should be printed at all. The printing module 32 comprises the variable exposure level laser.

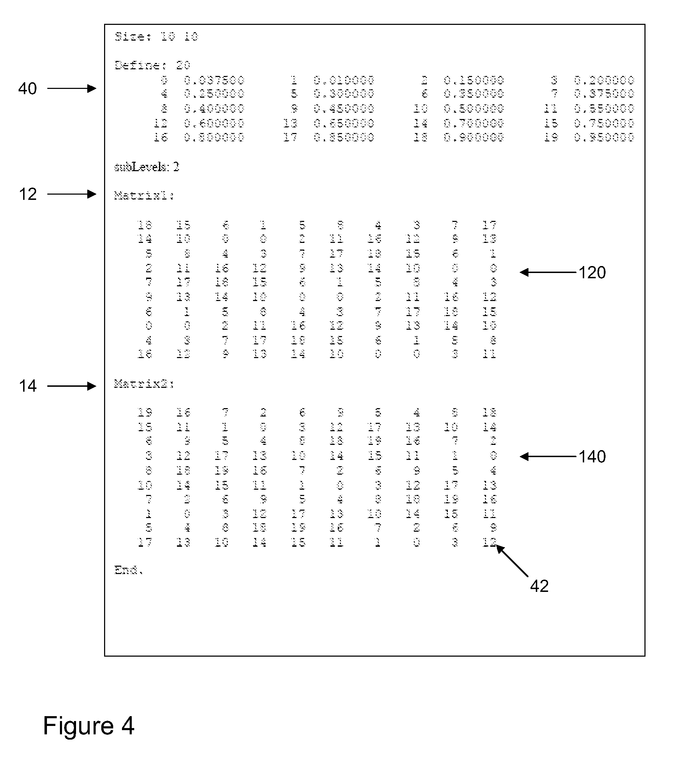

Referring to Figure 4, there is shown an example pair of a first exposure level screening matrix 12 and a second exposure level screening matrix 14. The matrices 12, 14 have a size of 10 by 10 pixels. Two matrices are provided since the variable exposure level laser printer to which they are required to provide instructions comprises two exposure levels, a full exposure level and an intermediate exposure level. The first matrix 12 is a partial exposure level screening matrix and the second matrix is a full exposure level screening matrix. The first matrix comprises a first set of 100 (10 by 10) threshold values. The second matrix 14 comprises a second set 140 of 100 threshold values. In this embodiment the threshold values provided in the second set 140 are greater than (or equal to, when zero) the corresponding values provided in the first set 120. In other embodiments there may be different relationships, or no relationship, between the threshold values of the first 120 and second 140 sets.

In this embodiment, a matrix dictionary in the form of a key table 40 is provided. The key table 40 comprises twenty reference numerals which correspond to different continuous tone values. The reference numerals in the first 120 and second 140 sets of threshold values correspond to the continuous tone values provided by the corresponding reference numerals in the key table 40. In other embodiments, a key table may not be provided and the sets of threshold values in the matrices include the continuous tone values themselves. The provision of the key table provides a clear and compact matrix structure in this embodiment.

The reference numerals within each matrix 12, 14 represent threshold values which are used to compare against the continuous tone value of an image to be printed (e.g. a continuous tone image) and from this is can be determined, for each pixel, whether or not that particular pixel should be printed in order to provide the desired image.

For example, in this embodiment, a continuous tone image to be printed is represented by a number from 0.000 (white) to 1.000 (black). Therefore the shade of the continuous image that is required is represented by a number between 0 and 1, e.g. grey 0.270 or grey 0.310 etc.

In this example, the key table 40 comprises twenty reference numerals corresponding to twenty different continuous tone threshold values.

When the comparator 16 is required to make a determination as to whether or not a pixel should be printed at a particular laser exposure, the continuous tone value of the image to be printed is compared with the threshold value within the relevant exposure level matrix for that pixel. For example, when considering a block of 10 by 10 pixels within an image to be printed, in order to determine whether any of those pixels should be printed at a full laser exposure, the desired continuous tone value of the final image (e.g. 0.370) is compared to the threshold value within the second matrix 14, pixel by pixel. For example, for the final pixel in the matrix (the bottom right pixel 42), the threshold value is compared with the desired CT value. The CT value (0.370) is less than the threshold value, 12 (which according to the key value 40 translates to 0.600). Therefore this pixel is not printed at full laser exposure. If the desired CT value is instead, for example, 0.800, then the same pixel would be printed at a full laser exposure since the desired CT value (0.800) would be greater than the relevant threshold value (0.600).

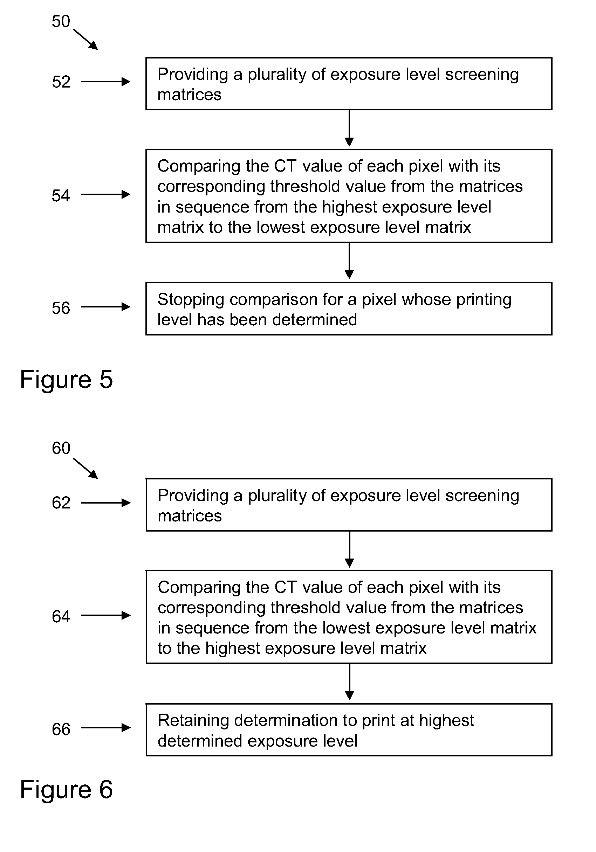

Referring to Figure 5, in an embodiment of the invention, there is provided an image screening method 50 which comprises providing 52 a plurality of exposure level screening matrices, comparing 54 the CT value of each pixel with its corresponding threshold value from the matrices in sequence, from the highest exposure level matrix to the lowest exposure level matrix.

Therefore, referring to Figure 4 for any particular block of 10 by 10 pixels being processed, the block would initially be compared with the second (full) exposure level matrix 14, before being compared with the first (partial) exposure level matrix 12.

In this embodiment, the method 50 comprises stopping 56 further comparisons with threshold values from other matrices, for a pixel whose printing level has already been determined successfully at a particular exposure level. For example, referring to Figure 4, for a particular pixel if it is determined that that pixel should be printed at a full laser exposure level after comparison with its relevant threshold value in the second matrix 14, then no comparison should be made for that pixel with its corresponding threshold value in the first exposure level matrix. This is because in this embodiment, once it is determined that a particular pixel should be printed at a full exposure level then it will not also need to be printed at the intermediate exposure level. The stopping feature 56 can increase the efficiency of the method 50 since unnecessary comparisons can be avoided. In other embodiments this may not be the case and further comparisons may be necessary.

Using the method 50, if the image to be printed had a desired CT value of 0.550, then for the last pixel 42 in a block of 10 by 10 pixels, the comparison with the second exposure level matrix would determine that the pixel should not be printed at the full exposure laser level. A subsequent comparison with the relevant threshold value of the partial laser exposure matrix 12 would determine that the pixel should be printed at a partial laser exposure level. This is because in this embodiment, the comparison determines that a pixel should be printed at a particular laser exposure level if the desired CT value is greater or equal to the threshold value. In other embodiments there may be a requirement for the desired CT value to be greater than the threshold value. In yet further embodiments, the value logic may be inverted so that the desired CT value needs to be less than, or less than or equal to, the relevant threshold value in order for that pixel to be printed.

Referring to Figure 6, an image screening method 60 according to a further embodiment comprises providing a plurality of exposure level screening matrices as described above. The method 60 comprises comparing the CT value of each pixel with its corresponding threshold value from the matrices in sequence from the lowest exposure level matrix to the highest exposure level matrix. In this embodiment, when a comparison determines that a particular pixel should be printed at more than one exposure level, then the determination to print at the highest of the more than one exposure levels is retained and any other determination to print the particular pixel at any lower exposure level is discarded. The method 60 therefore comprises retaining 66 the determination to print at the highest determined exposure level. For example, referring to Figure 4, for a particular pixel, its desired CT value is first compared with the corresponding threshold value from the first partial laser exposure matrix 12 and then the second full laser exposure matrix 14. If the first comparison shows that the pixel should be printed at the intermediate exposure level, the second comparison is made and if that second comparison determines that the pixel should be printed at the full exposure level, then the first determination is discarded and the second (higher exposure level) determination is retained. The pixel will eventually be printed at the highest exposure level. If the desired CT value is not greater than the threshold value in any of the exposure level screen matrices then the pixel is not printed.

In some embodiments the variable exposure level printer comprises a variable exposure laser and different exposure levels are obtained by varying the laser exposure time. In other embodiments different exposure levels are obtained by varying laser intensity or laser power and in yet further embodiments the different levels are obtained by a combination of these or other suitable features.

In some embodiments the desired CT values are provided in a range from 0 to 256 or 0 to 1000 instead of 0 to 1. It will apparent to the skilled person that any other suitable range can be used and this can be reflected in the key table, if there is one in that particular embodiment.

The relationship between the reference numerals of the key table and the CT values may be linear or non-linear - it is not linear in the key table 40 of Figure 4.

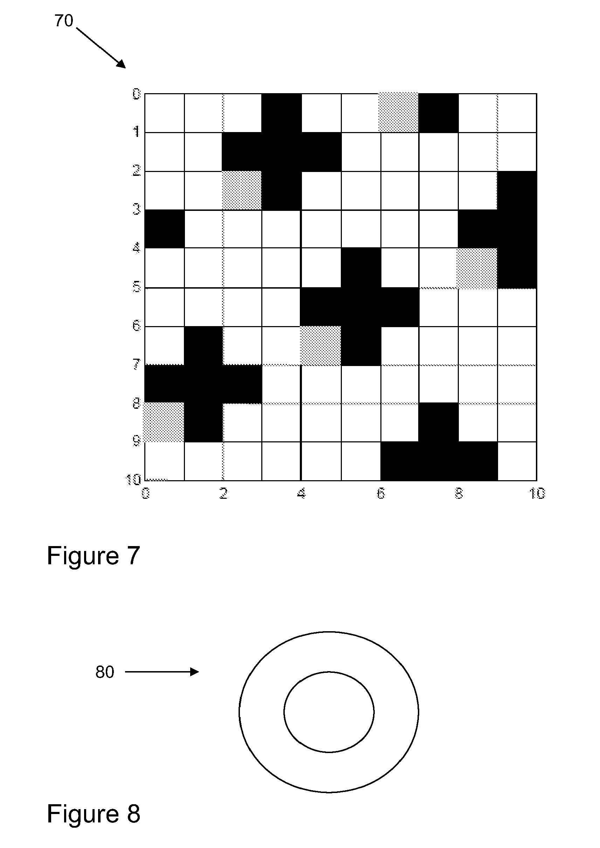

Referring to Figure 7, an example of printed output 70 resulting from a desired CT level of grey 0.270 processed through the matrices 12, 14 using either of the methods 50, 60 of Figures 5 and 6 is shown. An ordered screen with an angle of 26.6° is obtained. It will be appreciated that the printed output 70 can be tiled in a standard manner to obtain a larger region of grey 0.270.

In another embodiment, there is provided a computer program product having software thereon, which when run on a processor is arranged to carry out an image screening method according to this invention, e.g. the method of Figures 2, 5 or 6, or as claimed. Figure 8 shows such a computer program product in the form of a CD data carrier 80. It will be clear that other data carriers, such as other digital data carriers may also be used.

The software may be used to update the processor of an existing computer, which may be part of an existing printer.

Claims in any single category (method, system, computer program etc.) are intended to cover their equivalent features in each of the other categories even if they are not expressly claimed. For example, the image screening method claims are intended to cover corresponding image screening systems, corresponding computer programs or computer program products comprising software which when run a processor are arranged to carry out the image screening method and vice versa for the other claim categories. All of the features of the dependent claims are intended to be independent of each other to the extent that any of them on their own or in combination with other dependent claims can be used in conjunction with the independent claim from which they stem.

## Claims

1. A method (20) for screening an image, comprising pixels, prior to printing the image using a variable exposure level printer capable of printing at a plurality of exposure levels, the method comprising:
providing (22) a plurality of exposure level screening matrices for screening pixels of the image, each matrix being associated with a different printing exposure level and including a set of threshold values for screening a corresponding set of pixels in the image,
each pixel of the image to be printed having a continuous tone (CT) value,
determining (24) the exposure level at which a pixel should be printed or determining that the pixel should not be printed by comparing the CT value of each pixel with its corresponding threshold value from any one or more of the matrices.

2. The method of claim 1 wherein determining the exposure level at which a pixel should be printed comprises determining whether the CT value is:
higher than or equal to; or
lower than or equal to; or
higher than; or
lower than the corresponding threshold value in the associated exposure level matrix.

3. The method of claim 1 or claim 2 wherein determining the exposure level at which a pixel should be printed comprises comparing the CT value of the pixel with its corresponding threshold value from the matrices in sequence.

4. The method of claim 3 wherein determining the exposure level at which a pixel should be printed comprises comparing (54) the CT value of the pixel with its corresponding threshold value from the matrices in sequence from the highest exposure level matrix to the lowest exposure level matrix; and optionally
wherein comparing the CT value of the pixel with its corresponding threshold value is stopped (56) when a comparison determines that a pixel should be printed at a particular exposure level and no further threshold values from lower exposure level matrices are compared.

5. The method of claim 4 wherein the CT value of the pixel is compared with its corresponding threshold value from all of the matrices.

6. The method of claim 3 wherein determining the exposure level at which a pixel should be printed comprises comparing (64) the CT value of the pixel with its corresponding threshold value from the matrices in sequence from the lowest exposure level matrix to the highest exposure level matrix; and optionally
wherein when comparisons determine that a particular pixel should be printed at more than one exposure level, then the determination to print at the highest of the more than one exposure levels is retained (66) and any other determination to print the particular pixel at any lower exposure level is discarded.

7. The method of claim 6 wherein the CT value of the pixel is compared with its corresponding threshold value from all of the matrices.

8. A system (10) for screening an image, comprising pixels, prior to printing the image using a variable exposure level printer capable of printing at a plurality of exposure levels, the system comprising:
a plurality of exposure level screening matrices (12, 14) for screening pixels of the image, each matrix being associated with a different printing exposure level and including a set (120, 140) of threshold values for screening a corresponding set of pixels in the image,
each pixel of the image to be printed having a continuous tone (CT) value,
a comparator (16) for determining an exposure level at which a pixel should be printed or determining that the pixel should not be printed by comparing the CT value of each pixel with its corresponding threshold value from any one or more of the matrices, and
the variable exposure level printer (30) arranged to print the pixels of the image at the desired exposure levels.

9. The system of claim 8 wherein threshold values from relatively high exposure level matrices are greater than corresponding threshold values from relatively low exposure level matrices and the comparator is arranged to determine the exposure level at which a pixel should be printed by determining whether the CT value is:
higher than or equal to; or
higher than;
the corresponding threshold value in the associated exposure level matrix.

10. A computer program or computer program product (80) comprising software, which when run on a processor is arranged to carry out an image screening method for screening an image, comprising pixels, prior to printing the image using a variable exposure level printer capable of printing at a plurality of exposure levels, the method comprising:
providing a plurality of exposure level screening matrices for screening pixels of the image, each matrix being associated with a different printing exposure level and including a set of threshold values for screening a corresponding set of pixels in the image,
each pixel of the image to be printed having a continuous tone (CT) value,
determining the exposure level at which a pixel should be printed or determining that the pixel should not be printed by comparing the CT value of each pixel with its corresponding threshold value from any one or more of the matrices.
